# EUROPÄISCHE PATENTSCHRIFT

(11) **EP 0 435 011 B1**
(45) Veröffentlichungstag und Bekanntmachung des Hinweises auf die Patenterteilung: **05.02.1997**
(21) Anmeldenummer: 90122830.4
(22) Anmeldetag: 29.11.1990
(51) Int. Cl.: G01S 17/89, G01S 7/481

(54) **Entfernungsbildkamera**
Camera for distance imaging
Caméra de mesure de distance à images

(30) Priorität: 23.12.1989 DE 3942770
(43) Veröffentlichungstag der Anmeldung: 03.07.1991
(60) Teilanmeldung: 95117494.5
(73) Patentinhaber: DORNIER GmbH, D-88039 Friedrichshafen (DE)
(72) Erfinder: Lux, Peter, W-7994 Langenargen (DE); Eibert, Max, W-7990 Friedrichshafen 24 (DE)

(56) Entgegenhaltungen:
- DE-A- 1 931 273
- US-A- 3 523 730
- US-A- 4 698 498
- RCA TECHNICAL NOTES NR. 752 Nr. 21, 1. April 1968, PRINCETON NJ US W.J. HANNAN: 'LASER MOBILITY AID FOR THE BLIND'
- PATENT ABSTRACTS OF JAPAN vol. 007, no. 084 (E-169)7. April 1983 & JP-A-58 010 833 ( HITACHI ) 21. Januar 1983

## Beschreibung

Die Erfindung betrifft eine Entfernungsbildkamera.

Eine Entfernungsbildkamera ist ein Instrument zur Abtastung und Entfernungsvermessung eines Raumes oder einer Szene mit Objekten im Sehfeld der Kamera. Die Entfernungsmessung beruht auf dem Laufzeitmessprinzip mittels eines oder mehrerer Lichtquellen und Detektoren. Durch die Bestimmung des Zeitintervalls zwischen abgestrahltem und empfangenem Licht, reflektiert vom abzubildenden Objekt, und aus der Kenntnis der Lichtgeschwindigkeit können die Entfernung oder ein Entfernungswert bestimmt werden. Eine Matrix von Entfernungswerten (entsprechend dem Entfernungsbild) entsteht dadurch, daß eine serielle oder parallele punktweise Abtastung über das Blickfeld der Kamera durchgeführt wird.

Die auf diese Weise erzeugten Entfernungswerte bzw. Matrixelemente können direkt in einem Rechner oder in speziellen Elektronikschaltungen ausgewertet werden und/oder über einen Graphikprozess, z.B. Kodierung in Grauwerten, Gitterprojektion, Falschfarben, und so weiter einer Darstellungseinheit wie z.B. einem Monitor dargestellt werden.
Ein Verfahren zur Auswertung der Informationen eines Entfernungsbilds ist z.B. aus der **DE 34 23 135** bekannt.

Da es sich bei der Entfernungsbildkamera um ein aktives Prinzip handelt, ist zusätzlich zu der Gewinnung der Entfernungsinformation auch eine Auswertung und/oder Darstellung der reflektierten Amplitudeninformation möglich. Durch diesen Umstand kann neben dem sogenannten Entfernungsbild auch ein Amplituden- bzw. Reflektivitätsbild (hier wird neben der Amplitude des reflektierten Lichts (normales Foto) auch die Entfernungsinformation mitberücksichtigt) dargestellt werden.

Aus **RCA Technical** Notes No. 752, 1. April 1968, W.J. Hannan: Laser Mobility Aid for the Blind ist ein Hilfsgerät für Blinde bekannt, mit dem eine dreidimensionale Darstellung eines Geländeausschnitts erzeugt werden kann. Als Lichtquelle ist ein zweidimensionales Laserdiodenarray vorgesehen. Durch serielle Ansteuerung der Dioden kann das Gelände punktweise abgetastet werden. Die Empfangsseite besteht aus einem Parabolreflektor sowie einem zweidimensionalen Fotodiodenarray in dessen Brennpunktbereich. Durch Entfernungsmessung mittels Zeitverzögerungsbestimmung kann Punktweise eine Konturenkarte des abgetasteten Geländes erstellt werden.

Aus der **DE-A-19 31 273** ist ein Untersuchungsorgan für das Lesen eines Schriftstücks mittels optischer Fasern bekannt, bei welchem ein faseroptischer Zeilenscanner verwendet wird.

Aufgabe der Erfindung ist es, eine Entfernungsbildkamera vorzuschlagen, die mechanisch stabil ist und eine Abtastung mit hoher Bildpunktzahl in zwei Dimensionen ermöglicht.

Diese Aufgabe wird erfindungsgemäß gelöst von einer Entfernungsbildkamera mit den Merkmalen des Anspruchs 1. Eine vorteilhafte Ausführungen der Erfindung ist Gegenstand eines Unteranspruchs.

Die Erfindung wird anhand von drei Figuren näher erläutert.

Es zeigen:
Fig. 1 die Grundelemente einer Entfernungsbildkamera,
Fig. 2 eine Entfernungsbildkamera mit mechanischer Abtastung,
Fig. 3 eine Entfernungsbildkamera mit Koaxial-Optik

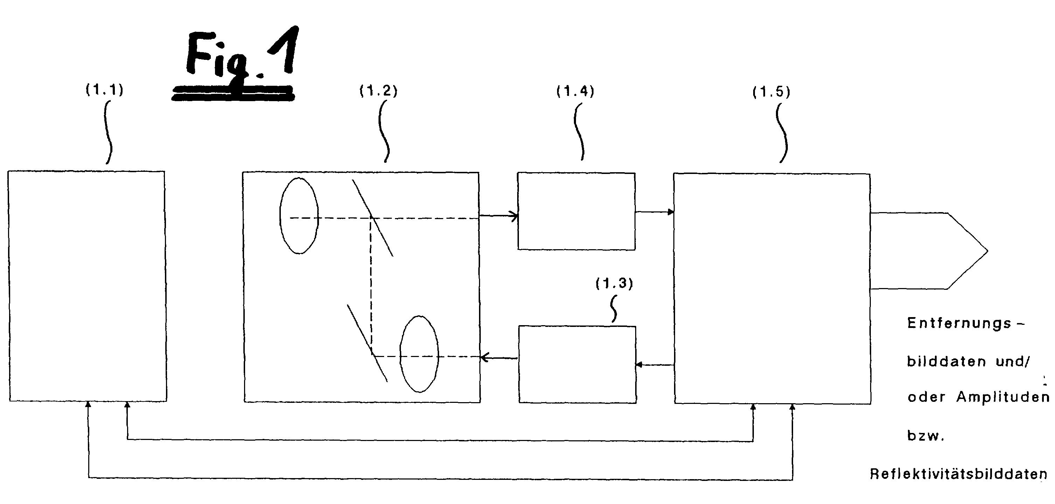

Fig. 1 zeigt die Grundelemente einer erfindungsgemäßen Entfernungsbildkamera:
- zweidimensionale Abtastung (zweidimensionaler Scan 1.1), z.B. in Zeile und Spalte
- Abbildungsoptik 1.2
- Impuls- oder Dauerstrichlichtquelle 1.3
- Detektor bzw. Empfänger 1.4
- Ansteuer- und Auswertelektronik 1.5
Zusätzlich zur Darstellung und Auswertung von Entfernungs- und Amplitudenbilddaten wird eine Rechner- oder Mikroprozessoreinheit mit einer Darstellungseinheit benötigt. Diese ist in Fig. 1 nicht gezeigt. Der Ausgang von Fig. 1 sind die Entfernungsbilddaten, Amplitudenbilddaten oder Reflektivitätsbilddaten.

Die wesentlichen Leistungsparameter einer Entfernungsbildkamera werden von der zweidimensionalen Abtastung bestimmt. Insbesondere für Systeme mit grösserer Bildpunktzahl, schneller Bildfolgefrequenz und grosser Reichweite ist die Ausführung der zweidimensionalen Abtastung unter anderem der leistungsbestimmende Faktor. Die Erfindung bezieht sich daher auf eine Verbesserung der zweidimensionalen Abtastvorrichtung.

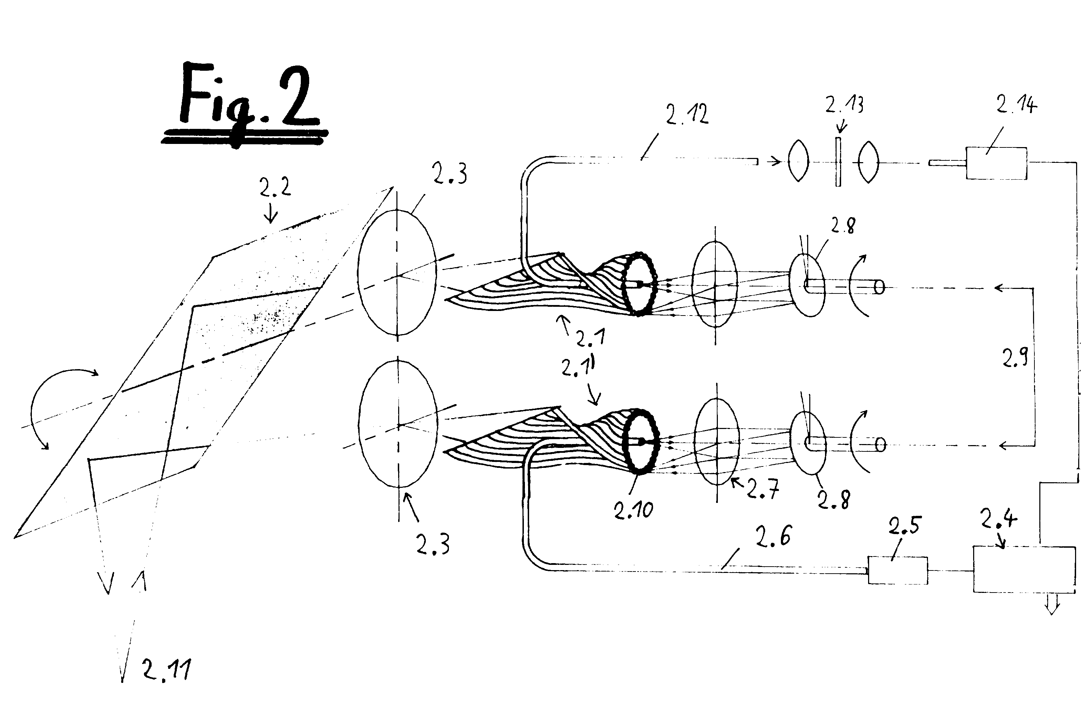

Fig. 2 zeigt eine Entfernungsbildkamera mit mechanischen Abtastungen. Die zweidimensionale Abtastung in dieser Ausführung ist in zwei Bereiche aufgeteilt. Links (vor der Optik 2.3) wird durch den Schwenkspiegel 2.2 oder ein anderes geeignetes Gerät ein Spaltenscan durchgeführt. Rechts (hinter der Optik 2.3) befinden sich die zwei faseroptischen Zeilenscanner (2.1 und 2.1'). In diesen faseroptischen Zeilenscannern 2.1 und 2.1' wird eine Brennebenentransformation von einer Zeile in einen Kreis durchgeführt.
Angesteuert von der Elektronik 2.4 wird in einem Laserdiodensender 2.5 ein Lichtimpuls erzeugt und in einen Lichtleiter 2.6 eingekoppelt. Am Ende des Lichtleiters 2.6 wird der ausgekoppelte Lichtimpuls über eine Optik 2.7 auf einen leicht geneigten, rotierenden Spiegel 2.8 abgebildet. Von dort wird er zurückreflektiert in die Optik 2.7 und in Abhängigkeit von der Spiegelstellung (Motorstellung 2.9) in eine der im Kreis 2.10 angeordneten Lichtleiterenden eingekoppelt. Am anderen Ende der Brennebenentransformation (hier von einem Kreis in eine Linie) befindet sich die Abbildungsoptik 2.3. Das Licht aus den Lichtleiterende in der Brennebene oder einer sonst auf die Optik 2.3 abgestimmten Linie erreicht in Abhängigkeit der Spiegelstellung 2.2 den Punkt 2.11 der abzubildenden Szene. Dieser Punkt 2.11 ist im Blickfeld der Entfernungsbildkamera und ein Punkt im Entfernungsbild. Reflektiertes Licht vom Punkt 2.11 läuft nun in umgekehrter Richtung über den Spaltenspiegel 2.2, die zweite Abbildungsoptik 2.3 und den identischen Pixel in der Brennebenentransformation 2.1 im Empfangszweig über den Zeilenscanner 2.1 mit dem Spiegel 2.8 in dei Empfängerlichtleiterfaser 2.12. Dort befindet sich in diesem Ausführungsbeispiel ein optisches Filter 2.13 zur Hintergrundunterdrückung. Das Licht (Echosignal) wird dann nach dem Filter 2.13 in einen Detektor (PIN- oder Lawinenfotodiode oder ein entsprechender Empfänger (2.14)) eingekoppelt und in ein elektrisches Signal umgewandelt
In der Elektronik 2.4 wird dann aus Sende- und Empfangssignal ein Entfernungswert ermittelt. Eine entsprechende Elektronik ist z.B. in der Patentanmeldung P 39 15 627.3 vorgeschlagen. Ein entsprechender faseroptischer Scanner ist in der Patentanmeldung der DORNIER LUFTFAHRT GmbH vom gleichen Tag mit der Bezeichnung "Faseroptischer Scanner" näher erläutert.

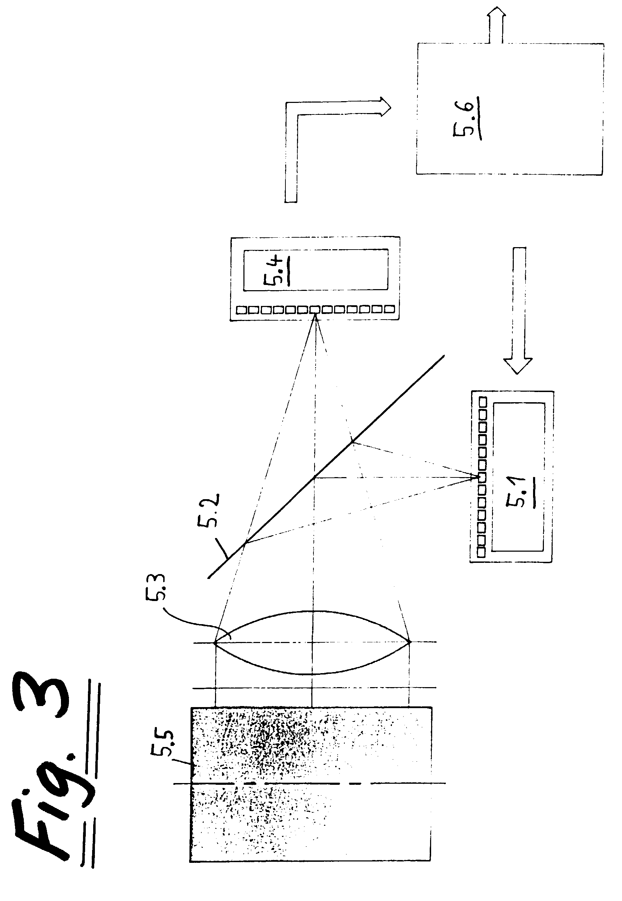

Das in Fig. 2 vorgeschlagene Doppel-Optik-System kann mit einer anderen Optikauslegung auch als Koaxial-Optik ausgeführt sein, wie Fig. 3 dies beispielhaft zeigt.

Fig. 3 zeigt eine Entfernungsbildkamera mit mechanischer Abtastung, jedoch mit koaxialer Optik.

Die faseroptischen Zeilenscanner 5.1, 5.4 sind hier nun schematisch dargestellt. Das vom Zeilenscanner 5.1 ausgesandte Licht gelangt über den teildurchlässigen Spiegel 5.2 und die Koaxial-Optik 5.3 auf den Schwenkspiegel 5.5, der den Spaltenscan durchführt.
Der reflektierte Lichtimpuls wird wiederum rückwärts über den Spiegel 5.5 und die Optik 5.3 auf den Zeilenscanner 5.4 abgebildet. Die Auswertung und Bestimmung der Laufzeit sowie der Entfernungswerte der Entfernungsbildpixel werden in der Elektronik 5.6 durchgeführt.

## Patentansprüche

1. Entfernungsbildkamera mit
- einer Lichtquelle (1.3; 2.5), deren Licht über eine
- zweidimensionale Scannvorrichtung (1.1) zum zeilen- und spaltenweisen Abtasten einer Szene verwendet wird,
- einem Empfänger (1.4, 2.14) für das reflektierte Licht und einer
- Ansteuer- und Auswerteelektronik (1.5, 2.4), die aus der Laufzeit die Entfernung des jeweiligen Szenenpunktes (2.11) berechnet,
**dadurch gekennzeichnet**, daß die zweidimensionale Sannvorrichtung enthält:
- eine Vorrichtung zum spaltenweisen Abscannen der Szene (Schwenkspiegel (2.2) oder rotierendes Prisma)
- eine Optik (2.3),
- einen faseroptischen Zeilenscanner (2.1') mit einem rotierenden Element (Spiegel 2.8), der das von der Lichtquelle (2.5) emittierte Licht in eine Zeile transformiert,
- einen zweiten faseroptischen Zeilenscanner (2.1) mit einem rotierenden Element (Spiegel 2.8), der aus der gescannten Zeile eine Folge von Lichtpulsen für den Empfänger (2.14) macht.

2. Entfernungsbildkamera nach Anspruch 1, **dadurch gekennzeichnet**, daß eine koaxiale Optik (5.3) für den Sendezweig und den Empfangszweig und ein Strahlteiler (teildurchlässiger Spiegel 5.2) vorgesehen sind.

## Claims

1. Distance imaging camera having
- a light source (1.3, 2.5), the light of which is used by a
- two-dimensional scanning device (1.1) for the line-by-line and column-by-column scanning of a scene;
- a receiver (1.4, 2.14) for the reflected light and an
- electronic actuating and evaluating device (1.5, 2.4) which calculates the distance of the relevant scene point (2.11) from the propagation time;
characterised in that the two-dimensional scanning device contains:
- a device for the column-by-column scanning of the scene (pivoting mirror (2.2) or rotating prism)
- an optical device (2.3);
- a fibre-optic line scanner (2.1') having a rotating element (mirror 2.8) which transforms the light emitted by the light source (2.5) into a line;
- a second fibre-optic line scanner (2.1) having a rotating element (mirror 2.8) which produces a sequence of light pulses for the receiver (2.14) from the scanned line.

2. Distance imaging camera according to Claim 1, characterised in that a coaxial optical device (5.3) for the transmission branch and the receiving branch, and a beam splitter (semi-reflecting mirror 5.2) are provided.

## Revendications

1. Caméra d'imagerie à distance, comprenant
- une source de lumière (1.3;2.5) dont la lumière est utilisée par l'intermédiaire
- d'un dispositif de balayage bidimensionnel (1.1) pour le balayage par lignes et par colonnes d'une scène
- un récepteur (1.4, 2.14) pour la lumière réfléchie et
- une électronique de commande et d'interprétation (1.5, 2.4) qui calcule la distance du point respectif (2.11) de la scène à partir du temps de propagation,
**caracterisée en** ce que le dispositif de balayage bidimensionnel comprend :
- un dispositif pour le balayage par colonnes de la scène (miroir pivotant (2.2) ou prisme tournant)
- un système optique (2.3)
- un dispositif de balayage de lignes à fibres optiques (2.1') avec un élément tournant (miroir 2.8) qui transforme la lumière émise par la source de lumière (2.5) en une ligne
- un second dispositif de balayage de lignes à fibres optiques (2.1) avec un élément tournant (miroir 2.8) qui transforme la ligne balayée en une succession d'impulsions de lumière pour le récepteur (2.14).

2. Caméra d'imagerie à distance à images selon la revendication 1, caractérisée en ce qu'elle comprend un système optique coaxial (5.3) pour la branche d'émission et la branche de réception, et un diviseur de faisceau (miroir semi-transparent 5.2).
